# EUROPEAN PATENT SPECIFICATION

(11) **EP 4 129 765 B1**
(45) Date of publication and mention of the grant of the patent: **23.07.2025**
(21) Application number: 21190052.7
(22) Date of filing: 06.08.2021
(51) Int. Cl.: B60R 9/048, B60R 9/10

(54) **BIKE CARRIER**
FAHRRADTRÄGER
PORTE-VÉLO

(43) Date of publication of application: 08.02.2023
(73) Proprietor: JMSYS Co., Ltd., Geumcheon-gu Seoul 08594 (KR)
(72) Inventor: CHOI, Ji Man, 08092 Seoul (KR)
(74) Representative: Dr. Gassner & Partner mbB

(56) References cited:
- KR-B1- 102 193 275

## Description

### [Technical Field]

The present invention relates to a bike carrier, and more specifically, to a bike carrier for transporting a bike by fixing the bike to a roof of a vehicle.

### [Background Art]

In general, bikes are used for transportation or leisure, and in recent years, due to high interest in health and traffic congestion during commuting, the number of bike users is increasing explosively.

Compared to other transportation devices, bikes have a number of advantages, such as no environmental pollution and great help in improving the health of users. Such a bike may be used in the vicinity of a residence, but, for example, when a bike is used on a mountain biking course located in a remote place, the bike is typically transported by using a bike carrier that can be mounted on a vehicle.

As a bike carrier mounted on the vehicle, a roof-type bike carrier installed on a roof rack of the vehicle and a rear carrier installed on the rear of the vehicle are widely used, and various technologies related to the bike carrier are being studied.

For example, Korean Patent Registration No. 10-1550168 (Application No.: 10-2015-0004144, Applicant: Il-shik Yoon, Jun-chan Yoon) discloses a bike carrier for a vehicle that includes a vertical support rotatably connected to a base support rod, a horizontal support rotatably connected to the base support rod to form a fixed angle with respect to the vertical support, a bike holder rotatably connected to the base support rod, an angle fixing rod connected between the horizontal support and the bike holder to fix the angle of the horizontal support and the bike holder, two handle fixing bars slidably installed on both sides of the base support rod, a bike frame fixing bar for fixing a horizontal frame of the bike, and three fixing straps having adjustable lengths. In addition, studies related to bike carriers for vehicles are continuously carried out. Publication KR102193275B shows a bike carrier according to the preamble of claim 1.

### [Disclosure]

### [Technical Problem]

One technical object of the present invention is to provide a bike carrier capable of lowering the center of gravity thereof.

Another technical object of the present invention is to provide a bike carrier that can be easily parked in an existing parking space.

Still another technical object of the present invention is to provide a bike carrier capable of fixing bikes of various sizes and types through simple control.

The technical objects of the present invention are not limited to the above.

### [Technical Solution]

In order to accomplish the above technical objects, the present invention provides a bike carrier with the features of claim 1. Other alternatives are defined in the dependent claims.

### [Advantageous Effects]

In the case of the bike carrier according to an embodiment of the present invention, the bike may be fixed to the roof of the vehicle in a lying state. Accordingly, the center of gravity can be lowered as much as possible, so that driving stability can be improved, and the vehicle can be easily parked in an existing parking area. In addition, since the frame of the bike can be fixed through the frame fixing module and the tire of the bike can be fixed through the tire fixing module, fixing stability can be improved. In addition, since the frame and the tire having various sizes and types can be fixed through simple control of the frame fixing module and the tire fixing module, various types of bikes can be fixed to the roof of the vehicle.

### [Description of Drawings]

FIG. 1 is a view showing a bike carrier according to a first embodiment.
FIGS. 2 to 5 are views showing a frame fixing module included in a bike carrier according to a first embodiment.
FIG. 6 is a view showing a tire fixing module included in a bike carrier according to a first embodiment.
FIGS. 7 and 8 are views showing a state in which a bike carrier according to a first embodiment is mounted on a roof of a vehicle.
FIG. 9 is a view showing a holding arm included in a bike carrier according to a second embodiment.
FIG. 10 is a view showing the operation of a holding arm included in a bike carrier according to a second embodiment.
FIGS. 11 to 13 are views showing a bike carrier according to a third embodiment.
FIGS. 14 to 16 are views illustrating a frame fixing module included in a bike carrier according to a third embodiment.
FIGS. 17 and 18 are views illustrating an operation state of a frame fixing module included in a bike carrier according to a third embodiment.
FIGS. 19 and 20 are views showing another example of a frame fixing module included in a bike carrier according to a third embodiment.
FIG. 21 is a view showing a fork fixing module included in a bike carrier according to a third embodiment.
FIG. 22 is a view illustrating an operation state of a fork fixing module included in a bike carrier according to a third embodiment.
FIG. 23 is a view showing another example of a fork fixing module included in a bike carrier according to a third embodiment.
FIG. 24 is a view illustrating a state in which a bike is fixed to a bike carrier according to a third embodiment.
FIGS. 25 and 26 are views showing a bike carrier according to a fourth embodiment according to the present invention.
FIG. 27 is a view showing the operation of a sliding module included in a bike carrier according to a fourth embodiment of the present invention.
FIGS. 28 and 29 are views specifically illustrating a sliding module included in a bike carrier according to a fourth embodiment of the present invention.

### [Best Mode]

### [Mode for Invention]

Hereinafter, preferred embodiments of the present invention will be described in detail with reference to the accompanying drawings.

When it is mentioned in the specification that one element is on another element, it means that the first element may be directly formed on the second element or a third element may be interposed between the first element and the second element. Further, in the drawings, a shape and a size are exaggerated for efficient description of the technical contents.

In addition, in the various embodiments of the present specification, the terms such as first, second, and third are used to describe various elements, but the elements are not limited to the terms. Accordingly, an element mentioned as a first element in one embodiment may be mentioned as a second element in another embodiment. The embodiments illustrated here include their complementary embodiments. Further, the term "and/or" in the specification is used to include at least one of the elements enumerated in the specification.

In the specification, the terms of a singular form may include plural forms unless otherwise specified. Further, the terms "including" and "having" are used to designate that the features, the numbers, the steps, the elements, or combinations thereof described in the specification are present, and are not to be understood as excluding the possibility that one or more other features, numbers, steps, elements, or combinations thereof may be present or added. In addition, the term "connection" used herein may include the meaning of indirectly connecting a plurality of components, and directly connecting a plurality of components.

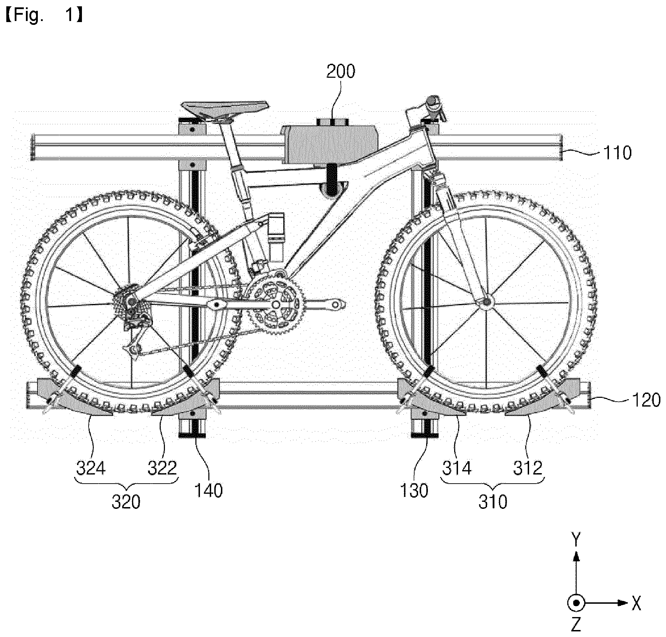

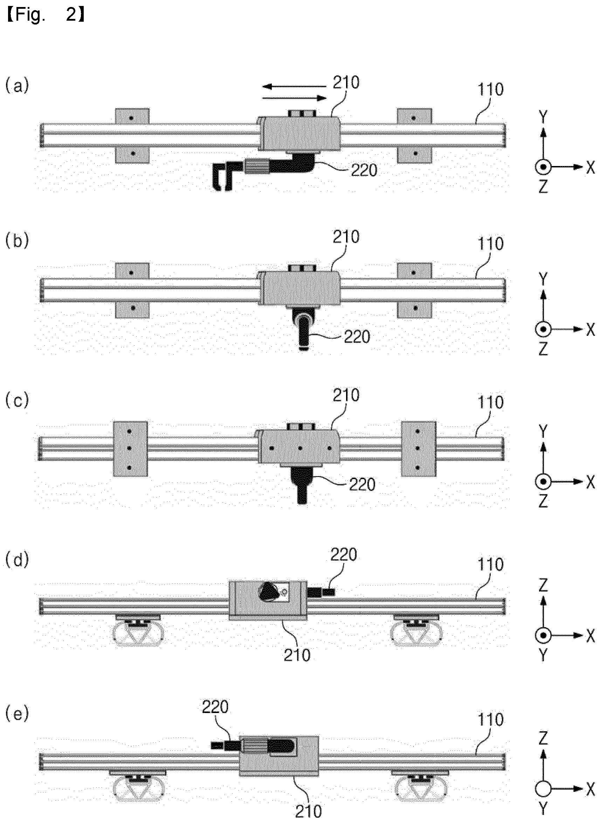

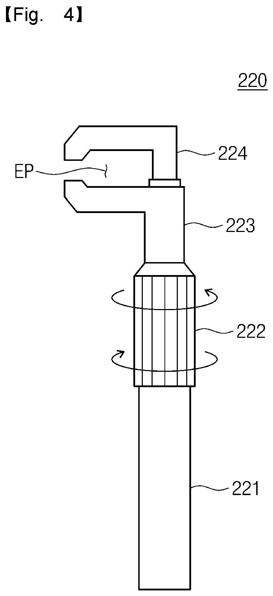

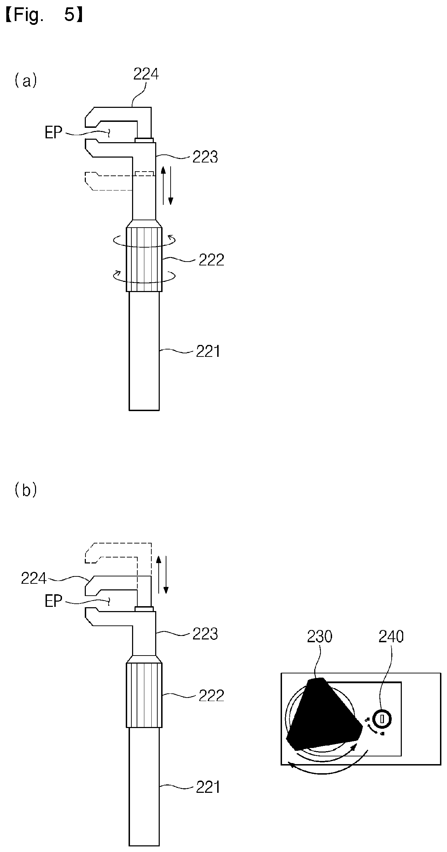

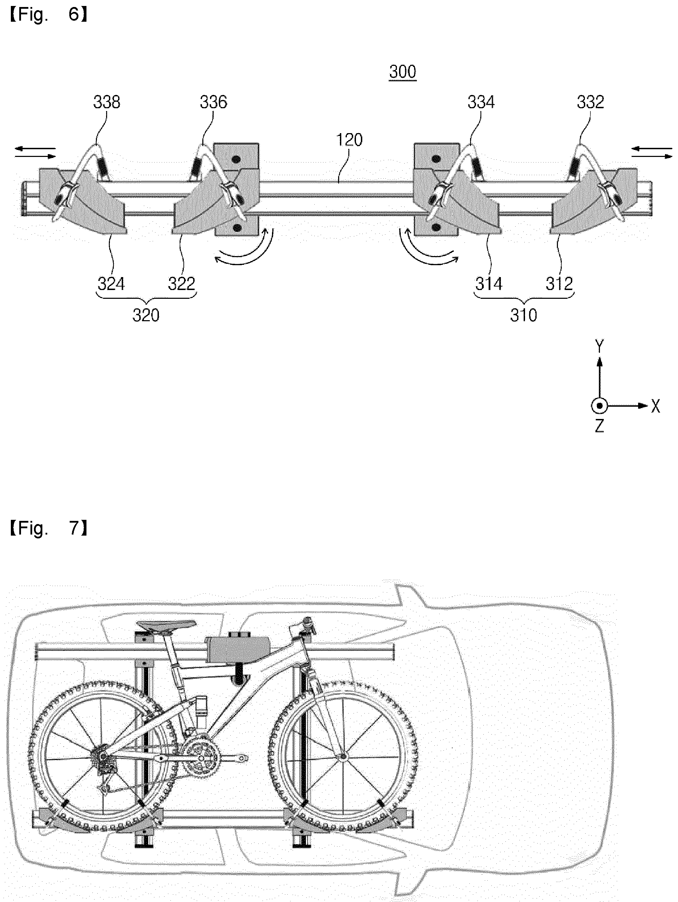

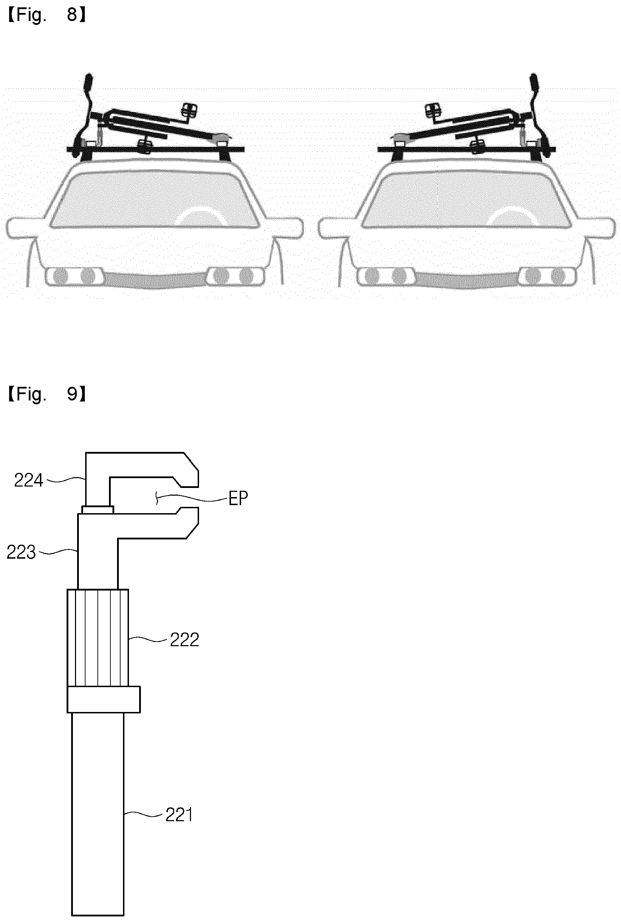

FIG. 1 is a view showing a bike carrier according to a first embodiment, FIGS. 2 to 5 are views showing a frame fixing module included in a bike carrier according to a first embodiment, FIG. 6 is a view showing a tire fixing module included in a bike carrier according to a first embodiment, and FIGS. 7 and 8 are views showing a state in which a bike carrier according to a first embodiment is mounted on a roof of a vehicle.

Referring to FIG. 1, the bike carrier according to the first embodiment may include roof rack modules 110, 120, 130, and 140, a frame fixing module 200, and tire fixing modules 310 and 320. The bike carrier according to the first embodiment may fix the bike disposed on the roof of the vehicle. Hereinafter, each configuration will be described.

### Roof rack module

The roof rack module may include a first roof rack 110, a second roof rack 120, a third roof rack 130, and a fourth roof rack 140. According to one embodiment, the first to fourth roof racks 110, 120, 130, and 140 may be disposed on a roof of a vehicle.

The first roof rack 110 may extend in a first direction. According to an embodiment, the first direction may be a longitudinal direction of the vehicle. For example, the first direction may be an X-axis direction shown in FIG. 1. The second roof rack 120 may extend in the first direction. The second roof rack 120 may be spaced apart from the first roof rack 110 while facing the first roof rack 110.

The third roof rack 130 may extend in the second direction. According to an embodiment, the second direction may be a width direction of the vehicle. For example, the second direction may be the Y-axis direction shown in FIG. 1. The third roof rack 130 may intersect the first roof rack 110 and the second roof rack 120.

The fourth roof rack 140 may extend in the second direction. The fourth roof rack 140 may be spaced apart from the third roof rack 130 while facing the third roof rack 130. The fourth roof rack 140 may also intersect the first roof rack 110 and the second roof rack 120.

In the description for the bike carrier according to the embodiment of the present invention, it is described that the first to fourth roof racks 110, 120, 130, and 140 are included, but the bike carrier according to the embodiment may be applied to the roof of the vehicle where the roof rack has been already installed. It can also be applied to automobile roofs. For example, when a vehicle roof rack extending in the width direction of the vehicle has been installed, the first and second roof racks 110 and 120 may be additionally installed, so that the bike carrier according to an embodiment of the present invention can be used. In addition, when a vehicle roof rack extending in the longitudinal direction of the vehicle has been installed, the third and fourth roof racks 130 and 140 may be additionally installed, so that the bike carrier according to an embodiment of the present invention can be used.

### Frame fixing module

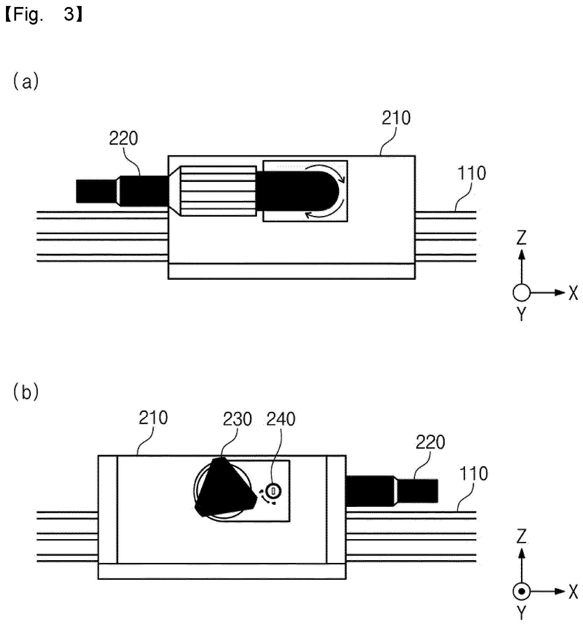

Referring to FIGS. 1 to 4, the frame fixing module 200 may include a housing 210, a holding arm 220, a holding adjustment lever 230, and a lock 240. In FIG. 2, (a) to (c) are plan views illustrating a rotating operation of the frame fixing module 200 about the second direction (Y-axis direction) in a state in which the frame fixing module 200 is coupled to the first roof rack 110, (d) is a rear view in a state in which the frame fixing module 200 is coupled to the first roof rack 110, and (e) is a front view in a state in which the frame fixing module 200 is coupled to the first roof rack 110. In FIG. 3, (a) is an enlarged view of Fig. 2 (e), and (b) is an enlarged view of FIG. 2 (d).

The housing 210 may be coupled to the first roof rack 110. According to an embodiment, the housing 210 may move in the first direction (X-axis direction) along the first roof rack 110. Accordingly, the position of the bike frame wrapped by the first holding rod 223 and the second holding rod 224 to be described below may be easily controlled.

The holding arm 220 may include a main rod 221, a rod adjustment lever 222, a first holding rod 223, and a second holding rod 224. The main rod 221 may be connected to the housing 210. The main rod 221 may be rotated clockwise or counterclockwise about the second direction (Y-axis direction). The first holding rod 223 may be connected to the main rod 221. For example, the first holding rod 223 may have a 'reverse-L' shape.

The rod adjustment lever 222 may be disposed between the main rod 221 and the first holding rod 223. The rod adjustment lever 222 may connect the main rod 221 and the first holding rod 223 to each other. Accordingly, the main rod 221 and the first holding rod 223 may be connected to each other.

The rod adjustment lever 222 may move the first holding rod 223. According to an embodiment, the rod adjustment lever 222 may be rotated clockwise or counterclockwise about an extension direction of the main rod 221. In this case, the first holding rod 223 may move in a direction away from or closer to the main rod 221. As a specific example, when the rod adjustment lever 222 rotates clockwise about the extension direction of the main rod 221, the first holding rod 223 may move away from the main rod 221. In contrast, when the rod adjustment lever 222 rotates counterclockwise about the extension direction of the main rod 221, the first holding rod 223 may move in a direction closer to the main rod 221.

As described above, since the first holding rod 223 is moved by the rod adjustment lever 222, the first holding rod 223 and the second holding rod 224 to be described below may wrap the bike frame having various sizes. For example, in the case of a bike frame disposed far from the housing 210, the first holding rod 223 may be moved in a direction away from the main rod 221 to easily wrap the bike frame. In contrast, in the case of a bike frame disposed close to the housing 210, the first holding rod 223 may be moved in a direction closer to the main rod 221 to easily wrap the bike frame.

The second holding rod 224 may be connected to the first holding rod 223. For example, the second holding rod 224 may have a 'reverse-L' shape. In addition, when the first holding rod 223 and the second holding rod 224 are connected to each other, the first and second holding rods 223 and 224 may have a ' 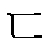 ' shape. That is, an empty space EP may be formed between the first holding rod 223 and the second holding rod 224.

According to an embodiment, the frame of the bike may be disposed in the empty space EP. Accordingly, the first holding rod 223 and the second holding rod 224 may wrap the frame of the bike.

The holding adjustment lever 230 may be disposed in the housing 210. According to an embodiment, the holding adjustment lever 230 may be disposed in the housing 210 to face the holding arm 220. For example, the holding arm 220 may be disposed on the front side of the housing 210, and the holding adjustment lever 230 may be disposed on the back side of the housing 210.

The holding adjustment lever 230 may move the second holding rod 224. According to an embodiment, the holding adjustment lever 230 may rotate clockwise or counterclockwise about the second direction. In this case, the second holding rod 224 may move in a direction away from or closer to the first holding rod 223. As a specific example, when the holding adjustment lever 230 is rotated clockwise about the second direction, the second holding rod 224 may move in a direction away from the first holding rod 223. On the contrary, when the holding adjustment lever 230 is rotated counterclockwise about the second direction, the second holding rod 224 may move in a direction closer to the first holding rod 223.

According to an embodiment, when the second holding rod 224 moves away from the first holding rod 223, the size of the empty space EP may increase. On the contrary, when the second holding rod 224 moves closer to the first holding rod 223, the size of the empty space EP may decrease. That is, the size of the empty space EP may be controlled through the control of the holding adjustment lever 230. Accordingly, the bike frame having various thicknesses can be effectively wrapped by the first holding rod 223 and the second holding rod 224.

The lock 240 may be disposed in the housing 210. According to an embodiment, the lock 240 may be disposed in the housing 210 in adjacent to the holding adjustment lever 230. According to an embodiment, the lock 240 may lock the rod adjustment lever 222 and the holding adjustment lever 230 to prevent the rod adjustment lever 222 and the holding adjustment lever 230 from being operated. For example, the lock 240 may lock the rod adjustment lever 222 and the holding adjustment lever 230 such that the rod adjustment lever 222 and the holding fixing lever 230 do not rotate. As a more specific example, the lock 240 may lock the rod adjustment lever 222 and the holding adjustment lever 230 by using a key.

When the rod adjustment lever 222 and the holding adjustment lever 230 are locked, the positions of the first holding rod 223 and the second holding rod 224 may be fixed. Accordingly, the frame of the bike wrapped by the first holding rod 223 and the second holding rod 224 may be fixed to the frame fixing module 200 by the first holding rod 223 and the second holding rod 224. In addition, when the rod adjustment lever 222 and the holding adjustment lever 230 are locked, the position of the main rod 221 rotated about the second direction (Y-axis direction) may also be fixed.

As a result, the frame fixing module 200 may fix the frame of the bike. In addition, the frame fixing module 200 may fix the bike frame having various sizes and thicknesses through the control of the rod adjustment lever 222 and the holding adjustment lever 230. In addition, the frame fixing module 200 may fix the bike frame at various positions as the housing 210 moves in the first direction (X-axis direction).

### Tire fixing module

Referring to FIGS. 1 and 6, the tire fixing module 300 may include a first tire fixing module 310, a second tire fixing module 320, a first fixing band 332, and a second fixing band 334, a third fixing band 336, and a fourth fixing band 338.

The first tire fixing module 310 may include a first fixing module 314 and a first moving module 312. The first fixing module 314 may be disposed on the second roof rack 120. More specifically, the first fixing module 314 may be disposed on the second roof rack 120 at a position where the second roof rack 120 and the third roof rack 130 intersect. The first moving module 312 may be disposed on the second roof rack 120 while facing the first fixing module 314. The first moving module 312 may be moved in the first direction (X-axis direction) along the second roof rack 120. The first fixing module 314 and the first moving module 312 may rotate clockwise or counterclockwise about the third direction. The third direction may be a direction perpendicular to the first direction and the second direction. For example, the third direction may be a Z-axis direction shown in FIG. 6.

A front tire of the bike may be disposed between the first fixing module 314 and the first moving module 312. The first fixing module 314 and the first moving module 312 may fix the front tire of the bike. In addition, as described above, since the first moving module 312 moves along the second roof rack 120, and the first fixing module 314 and the first moving module 312 are rotated in the third direction, tires having various sizes can be fixed.

The second tire fixing module 320 may include a second fixing module 322 and a second moving module 324. The second fixing module 322 may be disposed on the second roof rack 120. More specifically, the second fixing module 322 may be disposed on the second roof rack 120 at a position where the second roof rack 120 and the fourth roof rack 140 intersect. The second moving module 324 may be disposed on the second roof rack 120 while facing the second fixing module 322. The second moving module 324 may be moved in the first direction (X-axis direction) along the second roof rack 120. The second fixing module 322 and the second moving module 324 may be rotated clockwise or counterclockwise about the third direction. The third direction may be a direction perpendicular to the first direction and the second direction. For example, the third direction may be a Z-axis direction shown in FIG. 6.

A rear tire of the bike may be disposed between the second fixing module 322 and the second moving module 324. The second fixing module 322 and the second moving module 324 may fix the rear tire of the bike. In addition, as described above, since the second moving module 324 moves along the second roof rack 120, and the second fixing module 322 and the second moving module 324 are rotated in the third direction, tires having various sizes can be fixed.

The first to fourth fixing bands 332, 334, 336, and 338 may be disposed on the second roof rack 120 while being spaced apart from each other. The first fixing band 332 may be connected to the first moving module 312. The first fixing band 332 may wrap a predetermined region of the front tire of the bike. Accordingly, the first fixing band 332 and the first moving module 312 may fix the predetermined region of the front tire of the bike. The second fixing band 334 may be connected to the first fixing module 314. The second fixing band 334 may wrap a predetermined region of the front tire of the bike. Accordingly, the second fixing band 334 and the first fixing module 314 may fix the predetermined region of the bike.

The third fixing band 336 may be connected to the second fixing module 322. The third fixing band 336 may wrap a predetermined region of the rear tire of the bike. Accordingly, the third fixing band 336 and the second fixing module 322 may fix the predetermined region of the rear tire of the bike. The fourth fixing band 338 may be connected to the second moving module 324. The fourth fixing band 338 may wrap a predetermined region of the rear tire of the bike. Accordingly, the fourth fixing band 338 and the second fixing module 324 may fix the predetermined region of the rear tire of the bike.

As a result, the tire fixing module 300 may fix the tire of the bike to the second roof rack 120. In addition, as described above, since the first moving module 312 and the second moving module 324 are moved along the second roof rack 120, and the first and second fixing modules 314 and 322 and the first and second moving modules 312 and 324 are rotated in the third direction, tires having various sizes can be fixed.

Referring to FIGS. 7 and 8, the bike carrier according to the first embodiment may be disposed on the roof of the vehicle to fix the bike in a lying state. Accordingly, the center of gravity may be lowered as much as possible so that driving stability can be improved, and the vehicle can be easily parked in an existing parking area.

To the contrary, in the case of the conventional roof carrier, since the bike is fixed on the roof of the vehicle in an erected state, it is impossible to enter a low tunnel or an underground parking lot, and there is a disadvantage that the bike may overturn due to shaking when driving on a curved road. In addition, in the case of a trunk carrier, there is a possibility of traffic violation because the license plate is not visible by the bike, and there is a disadvantage that the risk of an accident is high because the taillight and direction indicator light are not visible. Further, in the case of a tow carrier, it has the same problems as the trunk carrier, and there is a disadvantage in that the parking space is limited due to protrusions. In addition, in the case of a sea sucker, the risk of an accident is high when the air pressure is lost, so that it is necessary to periodically check the air pressure and the material life is short.

However, in the case of the bike carrier according to the embodiment, as described above, the bike may be fixed to the roof of the vehicle in a lying state. Accordingly, the problems of the existing carriers can be solved. In addition, since the frame of the bike is fixed through the frame fixing module 200 and the tire of the bike is fixed through the tire fixing module 300, the fixing stability can be improved. In addition, since various types of frames and tires having various sizes can be fixed through the simple control of the frame fixing module 200 and the tire fixing module 300, various bikes can be fixed to the vehicle roof.

The bike carrier according to the first embodiment has been described above. Hereinafter, a bike carrier according to a second embodiment, in which the configuration and operation of the holding arm are different from those of the first embodiment, will be described.

The bike carrier according to the second embodiment may include roof rack modules, a frame fixing module, and a tire fixing module. The roof rack modules, the frame fixing module, and the tire fixing module may be the same as the roof rack modules 110, 120, 130 and 140, the frame fixing module 200, and the tire fixing module 300 included in the bike carrier according to the first embodiment described with reference to FIGS. 1 to 6.

In the bike carrier according to the second embodiment, the first roof rack module 110 and the second roof rack module 120 may slidably move in the extension direction (for example, Y-axis direction) of the third roof rack module 130 and the fourth roof rack module 140 along the third roof rack module 130 and the fourth roof rack module 140. Accordingly, the bike can be more easily fixed and detached.

In addition, the bike carrier according to the second embodiment may have a holding arm different from the holding arm of the bike carrier according to the first embodiment. Accordingly, the detailed description of other components, except for the holding arm, will be omitted.

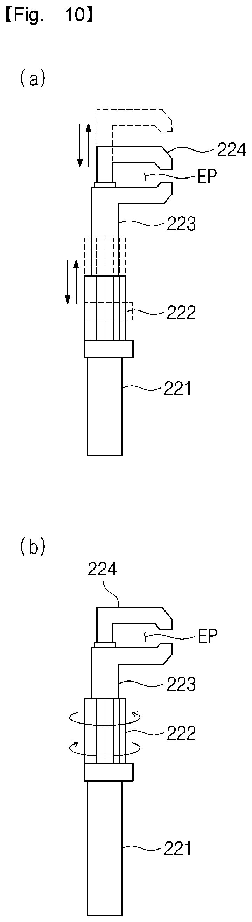

FIG. 9 is a view showing a holding arm included in a bike carrier according to a second embodiment, and FIG. 10 is a view showing the operation of a holding arm included in a bike carrier according to a second embodiment.

Referring to FIGS. 9 and 10, the holding arm included in the bike carrier according to the second embodiment includes a main rod 221, an adjustment lever 222, a first holding rod 223, and a second holding rod 223.

The main rod 221 may be connected to the housing. The main rod 221 may be rotated clockwise or counterclockwise about the second direction. The second direction may be an extension direction of the third roof rack 130 and the fourth roof rack 140. For example, the second direction may be a width direction of the vehicle.

The first holding rod 223 may be connected to the main rod 221. For example, the first holding rod 223 may have a 'reverse-L' shape. The adjustment lever 222 may be disposed between the main rod 221 and the first holding rod 223. The adjustment lever 222 may connect the main rod 221 and the first holding rod 223 to each other. Accordingly, the main rod 221 and the first holding rod 223 may be connected to each other.

The second holding rod 224 may be connected to the first holding rod 223. For example, the second holding rod 224 may have a 'reverse-L' shape. In addition, when the first holding rod 223 and the second holding rod 224 are connected, the first and second holding rods 223 and 224 may have a ' 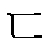 ' shape. That is, an empty space EP may be formed between the first holding rod 223 and the second holding rod 224.

According to an embodiment, the frame of the bike may be disposed in the empty space EP. Accordingly, the first holding rod 223 and the second holding rod 224 may wrap the frame of the bike.

The adjustment lever 222 may move the second holding rod 224. According to an embodiment, the adjustment lever 222 may move in the extension direction of the main rod 221. In this case, the second holding rod 224 may move in a direction away from or closer to the first holding rod 223. As a specific example, when the adjustment lever 222 moves in a direction closer to the first holding rod 223, the second holding rod 224 may move away from the first holding rod 223. In contrast, when the adjustment lever 222 moves in a direction away from the first holding rod 223, the second holding rod 224 may move in a direction closer to the first holding rod 223.

According to an embodiment, when the second holding rod 224 moves away from the first holding rod 223, the size of the empty space EP may increase. On the contrary, when the second holding rod 224 moves closer to the first holding rod 223, the size of the empty space EP may decrease. That is, the size of the empty space EP may be controlled through the control of the adjustment lever 222. Accordingly, the bike frame having various thicknesses can be effectively wrapped by the first holding rod 223 and the second holding rod 224.

In addition, the adjustment lever 222 may be rotated about the extension direction of the main rod 221. In this case, the position of the second holding rod 224 may be fixed. Accordingly, the frame of the bike wrapped by the first holding rod 223 and the second holding rod 224 may be fixed to the frame fixing module by the first holding rod 223 and the second holding rod 224.

The bike carrier according to the second embodiment has been described above. Hereinafter, a bike carrier according to a third embodiment will be described.

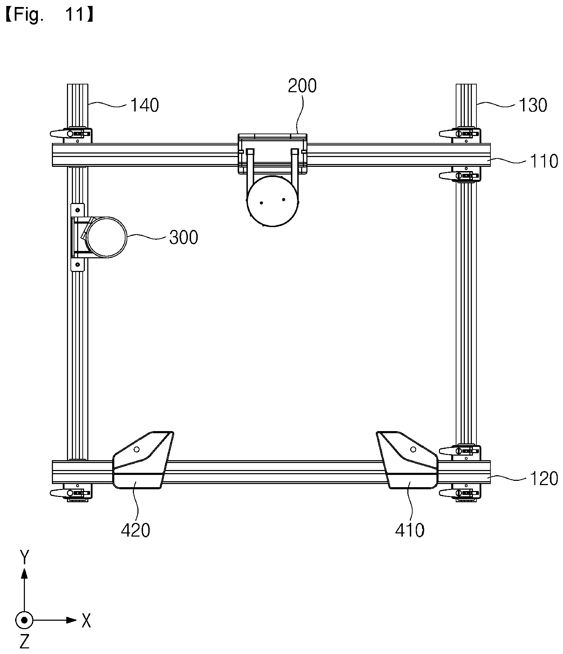

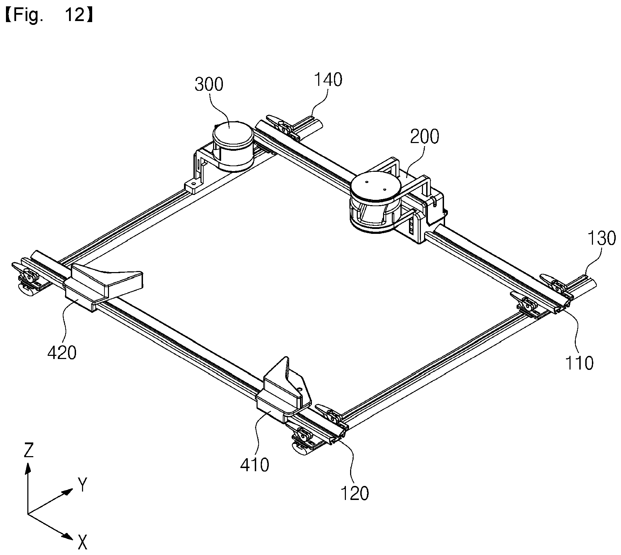

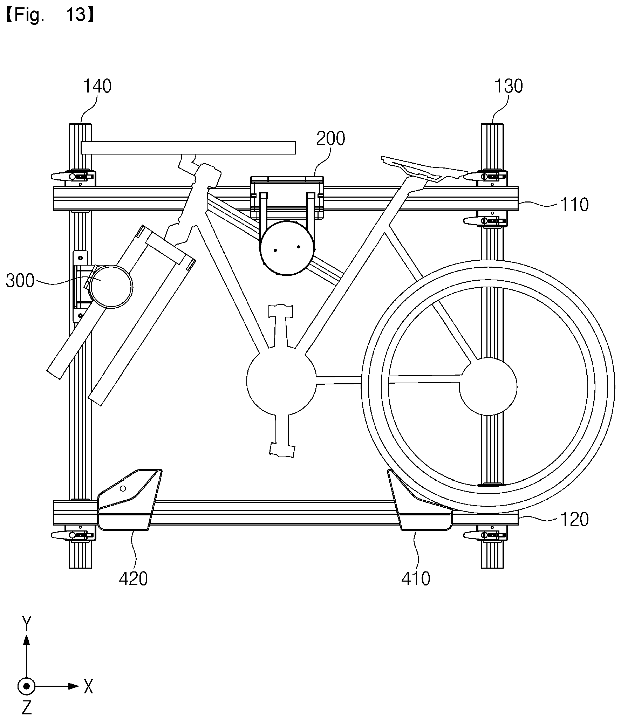

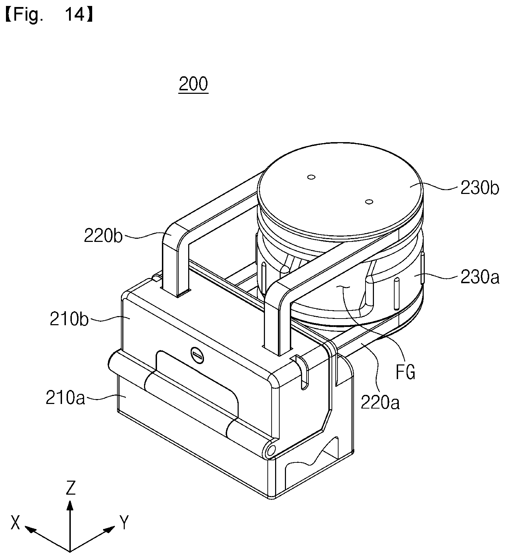

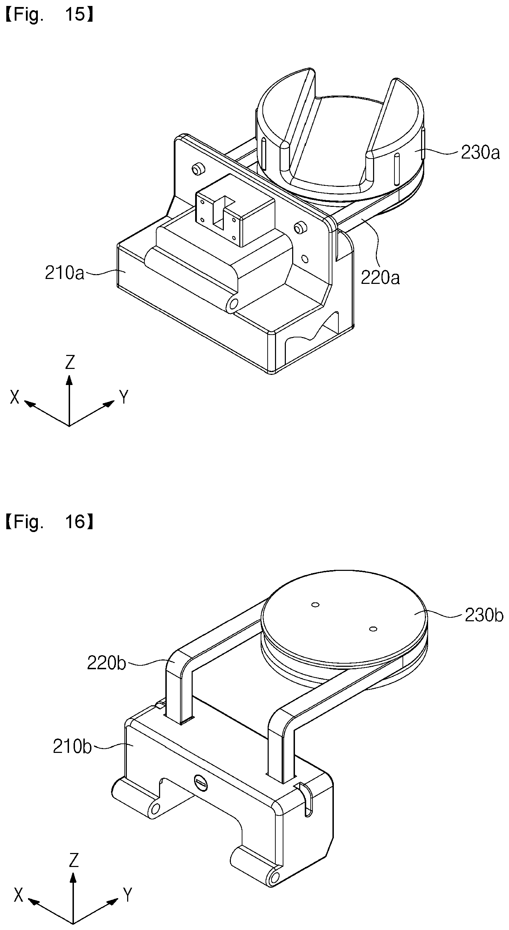

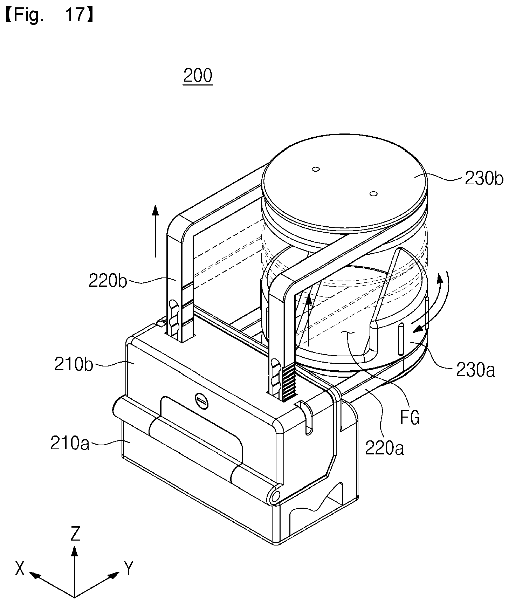

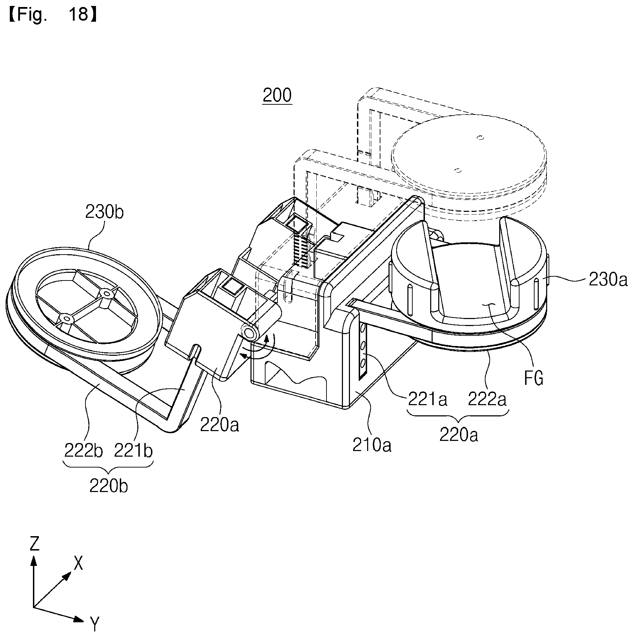

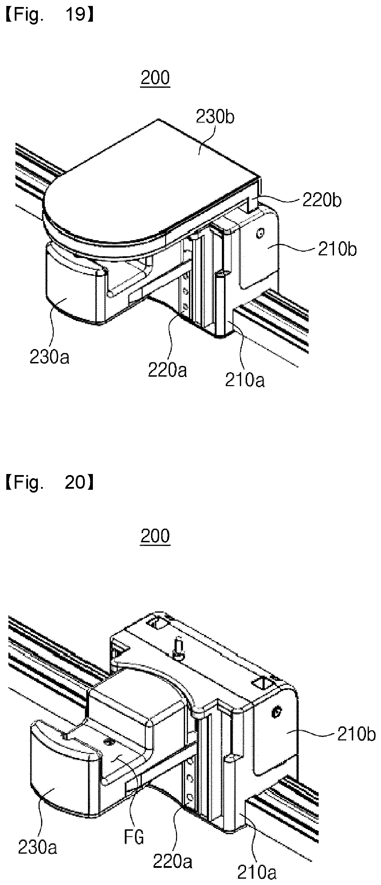

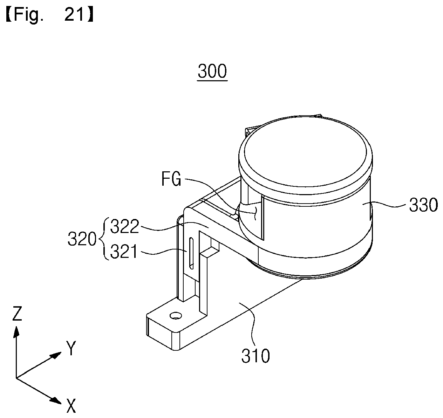

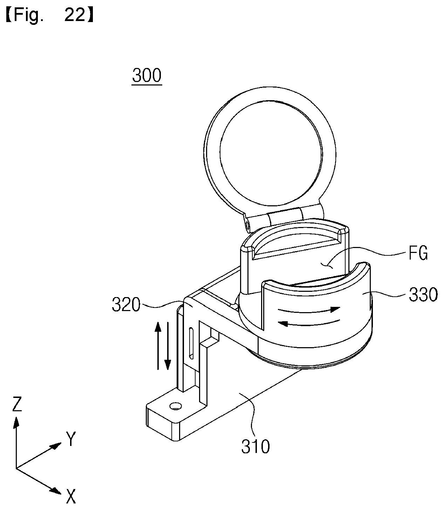

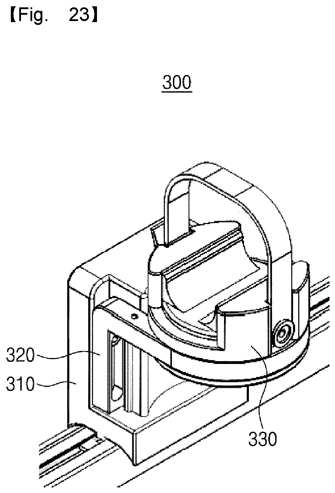

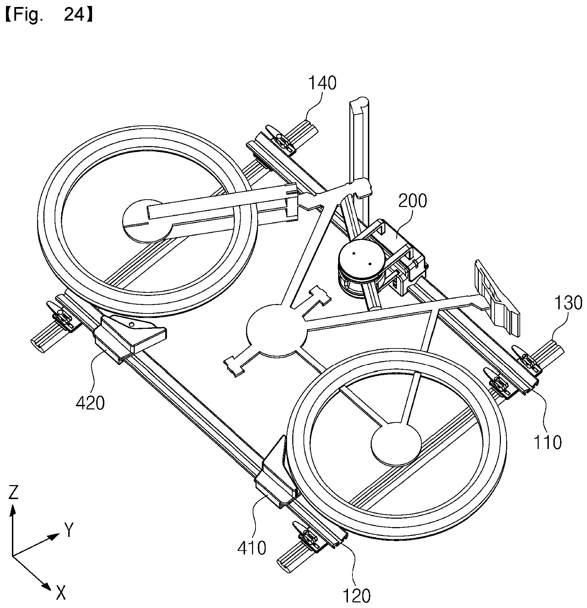

FIGS. 11 to 13 are views showing a bike carrier according to a third embodiment, FIGS. 14 to 16 are views illustrating a frame fixing module included in a bike carrier according to a third embodiment, FIGS. 17 and 18 are views illustrating an operation state of a frame fixing module included in a bike carrier according to a third embodiment of the present invention, FIGS. 19 and 20 are views showing another example of a frame fixing module included in a bike carrier according to a third embodiment, FIG. 21 is a view showing a fork fixing module included in a bike carrier according to a third embodiment, FIG. 22 is a view illustrating an operation state of a fork fixing module included in a bike carrier according to a third embodiment of the present invention, FIG. 23 is a view showing another example of a fork fixing module included in a bike carrier according to a third embodiment, and FIG. 24 is a view illustrating a state in which a bike is fixed to a bike carrier according to a third embodiment.

Referring to FIGS. 11 to 13, the bike carrier according to the third embodiment may include roof rack modules 110, 120, 130, and 140, a frame fixing module 200, a fork fixing module 300, and tire fixing modules 410 and 420. The roof rack modules included in the bike carrier according to the third embodiment may be the same as the roof rack modules included in the bike carrier according to the first embodiment described with reference to FIGS. 1 to 8. Accordingly, the detailed description thereof will be omitted. Hereinafter, the frame fixing module 200, the fork fixing module 300, and the tire fixing modules 410 and 420 will be described in detail.

### Frame fixing module

Referring to FIGS. 11 to 18, the frame fixing module 200 may include a first housing 210a, a first holding arm 220a, a first holder 230a, a second housing 210b, and a second holding arm 220b and a second holder 230b.

The first housing 210a may be coupled to the first roof rack 110 or the second roof rack 120. Hereinafter, a case in which the first housing 210a is coupled to the first roof rack 110 will be described as an example.

According to an embodiment, the first housing 210a may have a shape extending in the first direction (X-axis direction). The first housing 210a may move in the first direction (X-axis direction) along the first roof rack 110.

The first holding arm 220a may be coupled to the first housing 210a. According to an embodiment, the first holding arm 220a may be divided into a first region 221a and a second region 222a. The first region 221a of the first holding arm 220a may extend in the third direction (Z-axis direction). In contrast, the second region 222a of the first holding arm 220a may extend in the second direction (Y-axis direction).

According to an embodiment, one end of the first region 221a and one end of the second region 222a may be connected to each other. Accordingly, the first holding arm 220a may have a 'reverse-L' shape. In this case, the first holding arm 220a and the first housing 210a may be coupled through the first region 221a, and the first holding arm 220a and a first holder 230a to be described below may be coupled through the second region 222a.

The first region 221a of the first holding arm 220a may move in the third direction (Z-axis direction). Accordingly, the first holding arm 220a may move in the third direction (Z-axis direction).

The first holder 230a may be coupled to the first holding arm 220a. As described above, the first holder 230a may be coupled to the second region 222a of the first holding arm 220a. A frame groove FG may be formed in the first holder 230a. The frame of the bike may be disposed in the frame groove FG.

According to an embodiment, the first holder 230a may rotate clockwise or counterclockwise about the third direction (Z-axis direction). When the first holder 230a rotate, the frame groove FG formed in the first holder 230a may also rotate.

The second housing 210b may be coupled to the first housing 210a. According to an embodiment, the second housing 210b and the first housing 210a may be hinge-coupled. More specifically, the second housing 210b may be hinged to the first housing 210a so as to rotate clockwise or counterclockwise about the first direction (X-axis direction).

The second holding arm 220b may be coupled to the second housing 210b. According to an embodiment, the second holding arm 220b may be divided into a first region 221b and a second region 222b. The first region 221b of the second holding arm 220b may extend in the third direction (Z-axis direction). In contrast, the second region 222b of the second holding arm 220b may extend in the second direction (Y-axis direction).

According to an embodiment, one end of the first region 221b and one end of the second region 222b may be connected to each other. Accordingly, the second holding arm 220b may have a 'reverse-L' shape. In this case, the second holding arm 220b and the second housing 210b may be coupled through the first region 221b, and the second holding arm 220b and a second holder 230b to be described below may be coupled through the second region 222b.

The first region 221b of the second holding arm 220b may move in the third direction (Z-axis direction). Accordingly, the second holding arm 220b may move in the third direction (Z-axis direction).

The second holder 230b may be coupled to the second holding arm 220b. As described above, the second holder 230b may be coupled to the second region 222b of the second holding arm 220b.

The second holder 230b may come into contact with the first holder 230a. According to an embodiment, an upper surface of the first holder 230a may come into contact with a lower surface of the second holder 230b. When the first holder 230a and the second holder 230b come into contact with each other, the bike frame disposed in the frame groove FG of the first holder 230a may be wrapped by the first holder 230a and the second holder 230b.

According to an embodiment, when the second housing 210b is rotated counterclockwise in the first direction (X-axis direction) through the hinge coupling, the second holder 230b may move away from the first holder 230a. In this case, the frame groove FG included in the first holder 230a may be exposed to the outside. Accordingly, the bike frame may be rested in the frame groove FG.

In a state in which the second holder 230b and the first holder 230a are away from each other, if the second housing 210b is rotated clockwise in the first direction (X-axis direction) through the hinge coupling, the second holder 230b and the first holder 230a may come into contact with each other. In this case, the bike frame rested in the frame groove FG may be wrapped by the first holder 230a and the second holder 230b. Accordingly, the bike frame may be fixed to the bike carrier by the frame fixing module 200.

As described above, in the frame fixing module 200, the first housing 210a may move in the first direction (X-axis direction) along the first roof rack 110. In addition, the first holding arm 220a may move in the third direction (Z-axis direction). Further, the first holder 230a may rotate clockwise or counterclockwise about the third direction (Z-axis direction). Accordingly, the frame fixing module 200 can easily fix various types of bike frames and bike frames at various positions.

Alternatively, according to another embodiment, in the frame fixing module 200, the first holder 230a and the second holder 230b may have various shapes as shown in FIGS. 19 and 20.

### Fork fixing module

Referring to FIGS. 21 and 22, the fork fixing module 300 may include a fork support 310, a fork arm 320, and a fork holder 330. The fork fixing module may hold a fork when the front tire of the bike is assembled or disassembled.

The fork support 310 may be coupled to the third roof rack 130 or the fourth roof rack 140. Hereinafter, a case in which the fork support 310 is coupled to the fourth roof rack 140 will be described as an example.

According to an embodiment, the fork support 310 may have a shape extending in the third direction (Z-axis direction). The fork support 310 may move in the second direction (Y-axis direction) along the fourth roof rack 140.

The fork arm 320 may be coupled to the fork support 310. According to an embodiment, the fork arm 320 may be divided into a first region 321 and a second region 322. The first region 321 of the fork arm 320 may extend in the third direction (Z-axis direction). In contrast, the second region 322 of the fork arm 320 may extend in the first direction (X-axis direction).

According to an embodiment, one end of the first region 321 and one end of the second region 322 may be connected to each other. Accordingly, the fork arm 320 may have a 'reverse-L' shape. In this case, the fork arm 320 and the fork support 310 may be coupled through the first region 321, and the fork arm 320 and a fork holder 330 to be described below may be coupled through the second region 322.

The first region 321 of the fork arm 320 may move in the third direction (Z-axis direction). Accordingly, the fork arm 320 may move in the third direction (Z-axis direction).

The fork holder 330 may be coupled to the fork arm 320. As described above, the fork holder 330 may be coupled to the second region 322 of the fork arm 320. A fork groove FG may be formed in the fork holder 330. A fork of a bike may be disposed in the fork groove FG.

According to an embodiment, the fork holder 330 may be rotated clockwise or counterclockwise about the third direction (Z-axis direction). When the fork holder 330 rotates, the fork groove FG formed inside the fork holder 330 may also rotates. Accordingly, the fork fixing module 300 can easily fix various types of bike forks at various positions.

Alternatively, according to another embodiment, as shown in FIG. 23, in the fork fixing module 300, a fork of a bike disposed inside the fork holder 300 may be fixed by a band.

### Tire fixing module

The tire fixing module may include a first tire fixing module 410 and a second tire fixing module 420. The first and second tire fixing modules 410 and 420 may be disposed on the first roof rack 110 or the second roof rack 120. According to an embodiment, the first and second tire fixing modules 410 and 420 may be disposed on a roof rack facing the frame fixing module 200. For example, when the frame fixing module 200 is disposed on the first roof rack 110, the first and second tire fixing modules 410 and 420 may be disposed on the second roof rack 120.

A front tire and a rear tire of a bike may be fixed to the first and second tire fixing modules 410 and 420, respectively. According to an embodiment, the first and second tire fixing modules 410 and 420 may move in the first direction (X-axis direction) along the second roof rack 120. Accordingly, tires having various sizes can be fixed.

The bike carrier according to the third embodiment of the present invention has been described above. Hereinafter, a bike carrier according to a fourth embodiment of the present invention will be described.

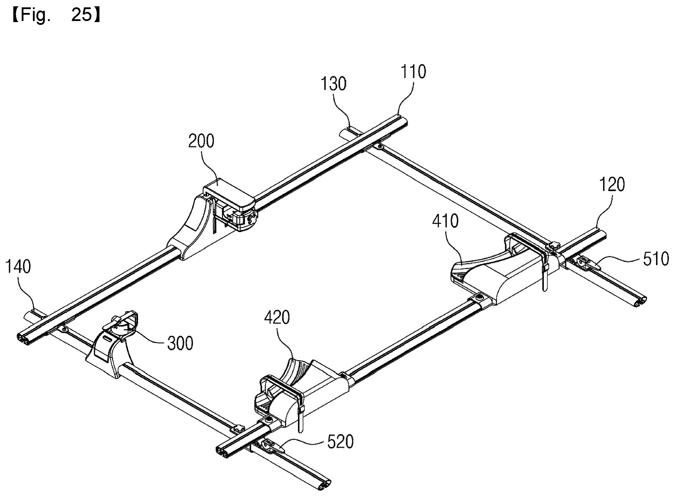

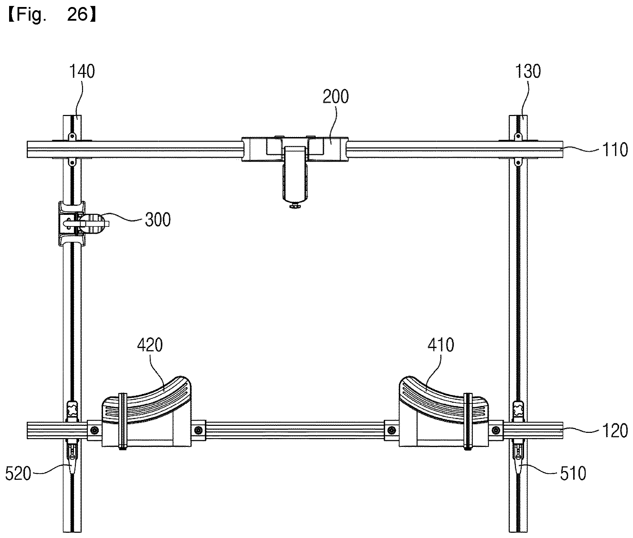

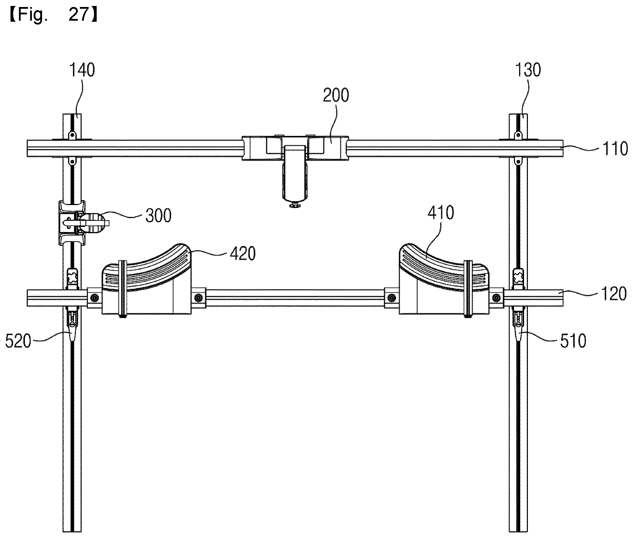

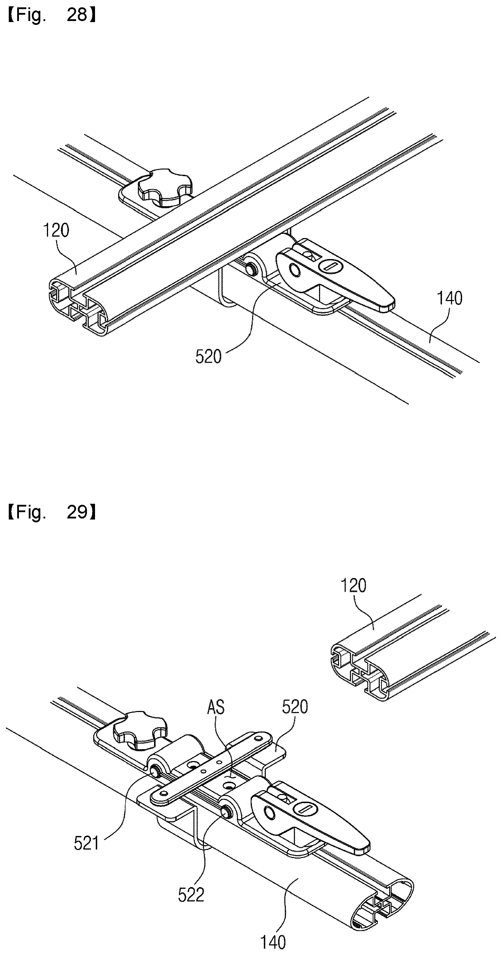

FIGS. 25 and 26 are views showing a bike carrier according to a fourth embodiment of the present invention, FIG. 27 is a view showing the operation of a sliding module included in a bike carrier according to a fourth embodiment of the present invention, and FIGS. 28 and 29 are views specifically illustrating a sliding module included in a bike carrier according to a fourth embodiment of the present invention.

Referring to 25 and 26, the bike carrier according to the fourth embodiment of the present invention may include roof rack modules 110, 120, 130, and 140, a frame fixing module 200, a fork fixing module 300, and tire fixing modules 410 and 420, and sliding modules 510 and 520. The roof rack module included in the bike carrier according to the fourth embodiment may be the same as the roof rack module included in the bike carrier according to the first embodiment described with reference to FIGS. 1 to 8. Meanwhile, the frame fixing module 200 included in the bike carrier according to the fourth embodiment may be the same as the frame fixing module included in the bike carrier according to the third embodiment described with reference to FIGS. 19 and 20, and the fork fixing module 300 included in the bike carrier according to the fourth embodiment may be the same as the fork fixing module included in the bike carrier according to the third embodiment described with reference to FIGS. 21 and 22. Accordingly, the detailed description thereof will be omitted. Hereinafter, the tire fixing modules 410 and 420 and the sliding modules 510 and 520 will be described in detail.

### Tire fixing module

Referring to FIGS. 25 and 26, the tire fixing modules 410 and 420 include a first tire fixing module 410 and a second tire fixing module 420. The first and second tire fixing modules 410 and 420 are disposed on the the second roof rack 120. According to an embodiment, the first and second tire fixing modules 410 and 420 may be disposed on a roof rack facing the frame fixing module 200. For example, when the frame fixing module 200 is disposed on the first roof rack 110, the first and second tire fixing modules 410 and 420 may be disposed on the second roof rack 120.

A front tire and a rear tire of a bike may be mounted on the first and second tire fixing modules 410 and 420, respectively. The first and second tire fixing modules 410 and 420 may move in the first direction along the second roof rack 120. Accordingly, tires having various sizes can be mounted.

In addition, each of the first and second tire fixing modules 410 and 420 may be provided with a band for fixing the tire of the bike. The wheels of the bike mounted on the first and second tire fixing modules 410 and 420 may be fixed to the first and second tire fixing modules 410 and 420 through the band.

### Sliding module

Referring to FIGS. 25 to 29, the sliding modules 510 and 520 may include a first sliding module 510 and a second sliding module 520. The first sliding module 510 may be disposed between the third roof rack 130 and the second roof rack 120. Alternatively, the second sliding module 520 may be disposed between the fourth roof rack 140 and the second roof rack 120.

According to an embodiment, the third roof rack 130 and the second roof rack 120 may be coupled through the first sliding module 510. For example, in a state in which the first sliding module 510 is installed on the third roof rack 130, the second roof rack 120 may be coupled to the first sliding module 510. Alternatively, the fourth roof rack 140 and the second roof rack 120 may be coupled through the second sliding module 520. For example, in a state in which the second sliding module 520 is installed on the fourth roof rack 140, the second roof rack 120 may be coupled to the second sliding module 520.

More specifically, as shown in FIG. 29, a mounting space AS may be formed between rollers 521 and 522 of the second sliding module 520, and the second roof rack 120 may be coupled to the second sliding module 520 through the mounting space AS. Although not shown, the first sliding module 510 may also have the same structure as the second sliding module 520, and the second roof rack 120 may be coupled through the mounting space of the first sliding module 510.

The first sliding module 510 may move along the third roof rack 130. In contrast, the second sliding module 520 may move along the fourth roof rack 140. Accordingly, as shown in FIG. 27, the second roof rack 120 coupled to the first sliding module 510 and the second sliding module 520 may move along the third roof rack 130 and the fourth roof rack 140. Accordingly, bikes having various sizes can be easily fixed.

Although the invention has been described in detail with reference to exemplary embodiments, the scope of the present invention is not limited to a specific embodiment and should be interpreted by the attached claims. In addition, those skilled in the art should understand that many modifications and variations are possible without departing from the scope of the present invention.

### [Description of Reference Numerals]

110, 120, 130, 140: first to fourth roofs
200: frame fixing module
210: housing
220: holding arm
230: holding adjustment lever
240: lock
300: tire fixing module
310: first tire fixing module
320: second tire fixing module
332, 334, 336, 338: first to fourth fixing band

## Claims

1. A bike carrier used in an apparatus for fixing a bike disposed on a vehicle roof, the bike carrier comprising:
a roof rack module including a first roof rack (110) extending in a first direction, a second roof rack (120) spaced apart from the first roof rack (110) while facing the first roof rack (110), a third roof rack (130) extending in a second direction perpendicular to the first direction and intersecting the first and second roof racks (110, 120), and a fourth roof rack (140) spaced apart from the third roof rack (130) while facing the third roof rack (130) and intersecting the first and second roof racks (110, 120);
a frame fixing module (200) including a housing (210) coupled to the first roof rack (110) to move in the first direction along the first roof rack (110), and a holding arm (220) connected to the housing (210) and rotated clockwise or counterclockwise about the second direction to fix a frame of the bike; and
a tire fixing module (410, 420) disposed on the second roof rack (120) to fix a tire of the bike,
wherein the tire fixing module (410, 420) includes: a first tire fixing module (410) and a second tire fixing module (420), the first and second tire fixing modules (410) and (420) being disposed on the second roof rack (120) and move in a direction along the second roof rack (120), the bike carrier comprising
a first sliding module (510) disposed between the third roof rack (130) and the second roof rack (120), to couple the third roof rack (130) and the second roof rack (120) and movable along the third roof rack (130),
a second sliding module (520) disposed between the fourth roof rack (140) and the second roof rack (120), to couple the fourth roof rack (140) and the second roof rack (120) and movable along the fourth roof rack (140),
wherein the second roof rack (120) is movable along the third roof rack (130) and the fourth roof rack (140) through the first sliding module (510) and the second sliding module (520),
wherein in a state in which the first sliding module (510) is installed on the third roof rack (130), the second roof rack (120) is coupled to the first sliding module (510),
wherein in a state in which the second sliding module (520) is installed on the fourth roof rack (140), the second roof rack (120) is coupled to the second sliding module (520), **characterised by** a mounting space formed between rollers (521, 522) of the first sliding module (510), the second roof rack (120) being coupled to the first sliding module (120) through the mouting space, and by a mounting space (AS) formed between rollers (521, 522) of the second sliding module (520), the second roof rack (120) being coupled to the second sliding module (520) through the mounting space (AS)..

2. The bike carrier of claim 1, wherein the holding arm (220) includes:
a main rod (221) connected to the housing (210) and rotated clockwise or counterclockwise about the second direction;
a first holding rod (223) connected to the main rod (221);
a rod adjustment lever (222) that is disposed between the main rod (221) and the first holding rod (223) to connects the main rod (221) and the first holding rod (223) and to move the first holding rod (223) such that the first holding rod (223) moves away from or closer to the main rod (221); and
a second holding rod (224) connected to the first holding rod (223),
the frame fixing module (200) further includes a holding adjustment lever (230) disposed in the housing (210) to face the holding arm (220) and to move the second holding rod (224) such that the second holding rod (224) moves away from or closer to the first holding rod (223), and
the frame of the bike is disposed in an empty space between the first holding rod (223) and the second holding rod (224), and is fixed to the frame fixing module (200) by the first holding rod (223) and the second holding rod (224).

3. The bike carrier of claim 1, further comprising a lock (240) for locking the rod adjustment lever (222) and the holding adjustment lever (230) to prevent the rod adjustment lever (222) and the holding adjustment lever (230) from being operated.

4. The bike carrier of claim 1, wherein the holding arm (220) includes:
a main rod (221) connected to the housing (210) and rotated clockwise or counterclockwise about the second direction;
a first holding rod (223) connected to the main rod (221);
a second holding rod (224) connected to the first holding rod (223); and
an rod adjustment lever (222) disposed between the main rod (221) and the first holding rod (223) to connect the main rod (221) and the first holding rod (223),
the second holding rod (224) moves away from or closer to the first holding rod (223) when the rod adjustment lever (222) moves in an extension direction of the main rod (221),
a position of the second holding rod (224) is fixed when the rod adjustment lever (222) is rotated about the extension direction of the main rod (221), and
the frame of the bike is disposed in an empty space between the first holding rod (223) and the second holding rod (224).

5. The bike carrier of claim 4, further comprising a lock (240) for locking the rod adjustment lever (222) to prevent the rod adjustment lever (222) from being operated.

## Patentansprüche

1. Fahrradträger, der in einer Vorrichtung zum Befestigen eines auf einem Fahrzeugdach angeordneten Fahrrads verwendet wird, wobei der Fahrradträger Folgendes umfasst:
ein Dachträgermodul mit einem ersten Dachträger (110), der sich in einer ersten Richtung erstreckt, einen zweiten Dachträger (120), der von dem ersten Dachträger (110) beabstandet ist, wobei er dem ersten Dachträger (110) zugewandt ist, einen dritten Dachträger (130), der sich in einer zweiten Richtung senkrecht zu der ersten Richtung erstreckt und den ersten und zweiten Dachträger (110, 120) schneidet, und einen vierten Dachträger (140), der von dem dritten Dachträger (130) beabstandet ist, während er dem dritten Dachträger (130) zugewandt ist und den ersten und zweiten Dachträger (110, 120) kreuzt;
ein Rahmenbefestigungsmodul (200) mit einem Gehäuse (210), das mit dem ersten Dachträger (110) verbunden ist, um sich in der ersten Richtung entlang des ersten Dachträgers (110) zu bewegen, und einen Haltearm (220), der mit dem Gehäuse (210) verbunden ist und im Uhrzeigersinn oder gegen den Uhrzeigersinn um die zweite Richtung gedreht wird, um einen Rahmen des Fahrrads zu befestigen; und
ein Reifenbefestigungsmodul (410, 420), das auf dem zweiten Dachträger (120) angeordnet ist, um einen Reifen des Fahrrads zu befestigen, wobei das Reifenbefestigungsmodul (410, 420) umfasst:
ein erstes Reifenbefestigungsmodul (410) und ein zweites Reifenbefestigungsmodul (420), wobei das erste und zweite Reifenbefestigungsmodul (410) und (420) auf dem zweiten Dachträger (120) angeordnet sind und sich in einer Richtung entlang des zweiten Dachträgers (120) bewegen,
wobei der Fahrradträger ein erstes Schiebemodul (510) umfasst, das zwischen dem dritten Dachträger (130) und dem zweiten Dachträger (120) angeordnet ist, um den dritten Dachträger (130) und den zweiten Dachträger (120) zu koppeln, und das entlang des dritten Dachträgers (130) beweglich ist,
ferner umfassend ein zweites Schiebemodul (520), das zwischen dem vierten Dachträger (140) und dem zweiten Dachträger (120) angeordnet ist, um den vierten Dachträger (140) und den zweiten Dachträger (120) zu koppeln, und das entlang des vierten Dachträgers (140) beweglich ist,
wobei der zweite Dachträger (120) entlang des dritten Dachträgers (130) und des vierten Dachträgers (140) durch das erste Schiebemodul (510) und das zweite Schiebemodul (520) beweglich ist,
wobei in einem Zustand, in dem das erste Schiebemodul (510) auf dem dritten Dachträger (130) installiert ist, der zweite Dachträger (120) mit dem ersten Schiebemodul (510) gekoppelt ist,
wobei in einem Zustand, in dem das zweite Schiebemodul (520) auf dem vierten Dachträger (140) installiert ist, der zweite Dachträger (120) mit dem zweiten Schiebemodul (520) gekoppelt ist,
**gekennzeichnet durch** einen zwischen den Rollen (521, 522) des ersten Schiebemoduls (510) gebildeten Einbauraum, wobei der zweite Dachträger (120) durch den Einbauraum mit dem ersten Schiebemodul (120) verbunden ist,
und durch einen zwischen den Rollen (521, 522) des zweiten Schiebemoduls (520) gebildeten Montageraum (AS), wobei der zweite Dachträger (120) durch den Montageraum (AS) mit dem zweiten Schiebemodul (520) gekoppelt ist.

2. Fahrradträger nach Anspruch 1, wobei der Haltearm (220) umfasst:
eine Hauptstange (221), die mit dem Gehäuse (210) verbunden ist und im oder gegen den Uhrzeigersinn um die zweite Richtung gedreht wird;
eine erste Haltestange (223), die mit der Hauptstange (221) verbunden ist;
einen Stangeneinstellhebel (222), der zwischen der Hauptstange (221) und der ersten Haltestange (223) angeordnet ist, um die Hauptstange (221) und die erste Haltestange (223) zu verbinden und die erste Haltestange (223) so zu bewegen, dass die erste Haltestange (223) sich von der Hauptstange (221 ) entfernt oder ihr nähert; und
eine zweite Haltestange (224), die mit der ersten Haltestange (223) verbunden ist,
wobei das Rahmenbefestigungsmodul (200) ferner einen Halteeinstellhebel (230) aufweist, der in dem Gehäuse (210) angeordnet und dem Haltearm (220) zugewandt ist und die zweite Haltestange (224) so zu bewegen, dass sich die zweite Haltestange (224) von der ersten Haltestange (223) weg oder zu ihr hin bewegt, und
wobei der Rahmen des Fahrrads in einem Leerraum zwischen der ersten Haltestange (223) und der zweiten Haltestange (224) angeordnet ist und durch die erste Haltestange (223) und die zweite Haltestange (224) an dem Rahmenbefestigungsmodul (200) befestigt ist.

3. Fahrradträger nach Anspruch 1, ferner umfassend ein Schloss (240) zum Verriegeln des Stangeneinstellhebels (222) und des Halteeinstellhebels (230), um zu verhindern, dass der Stangeneinstellhebel (222) und der Halteeinstellhebel (230) betätigt werden.

4. Fahrradträger nach Anspruch 1, wobei der Haltearm (220) umfasst:
eine Hauptstange (221), die mit dem Gehäuse (210) verbunden ist und im oder gegen den Uhrzeigersinn um die zweite Richtung gedreht wird;
eine erste Haltestange (223), die mit der Hauptstange (221) verbunden ist;
eine zweite Haltestange (224), die mit der ersten Haltestange (223) verbunden ist; und
einen Stangeneinstellhebel (222), der zwischen der Hauptstange (221) und der ersten Haltestange (223) angeordnet ist, um die Hauptstange (221) und die erste Haltestange (223) zu verbinden,
wobei die zweite Haltestange (224) sich von der ersten Haltestange (223) entfernt oder ihr nähert, wenn sich der Stangeneinstellhebel (222) in einer Ausfahrrichtung der Hauptstange (221) bewegt,
wobei eine Position der zweiten Haltestange (224) fixiert wird, wenn der Stangeneinstellhebel (222) um die Verlängerungsrichtung der Hauptstange (221) gedreht wird, und
wobei der Rahmen des Fahrrads in einem Leerraum zwischen der ersten Haltestange (223) und der zweiten Haltestange (224) angeordnet ist.

5. Fahrradträger nach Anspruch 4 umfasst ferner ein Schloss (240) zum Verriegeln des Stangeneinstellhebels (222), um zu verhindern, dass der Stangeneinstellhebel (222) betätigt wird.

## Revendications

1. Porte-vélo utilisé dans un appareil destiné à fixer un vélo disposé sur un toit de véhicule, le porte-vélo comprenant :
un module de galerie de toit comprenant une première galerie de toit (110) s'étendant dans un premier sens, une deuxième galerie de toit (120) espacée de la première galerie de toit (110) tout en faisant face à la première galerie de toit (110), une troisième galerie de toit (130) s'étendant dans un deuxième sens perpendiculaire au premier sens et croisant les première et deuxième galeries de toit (110, 120), et une quatrième galerie de toit (140) espacée de la troisième galerie de toit (130) tout en faisant face à la troisième galerie de toit (130) et croisant les première et deuxième galeries de toit (110, 120) ;
un module de fixation de cadre (200) comprenant un boîtier (210) couplé à la première galerie de toit (110) pour se déplacer dans le premier sens le long de la première galerie de toit (110), et un bras de maintien (220) relié au boîtier (210) et entraîné en rotation dans le sens horaire ou le sens antihoraire autour du deuxième sens pour fixer un cadre du vélo ; et
un module de fixation de pneu (410, 420) disposé sur la deuxième galerie de toit (120) pour fixer un pneu du vélo, en ce que le module de fixation de pneu (410, 420) comprend :
un premier module de fixation de pneu (410) et un second module de fixation de pneu (420), les premier et second modules de fixation de pneu (410) et (420) étant disposés sur la deuxième galerie de toit (120) et se déplacent dans un sens le long de la deuxième galerie de toit (120),
le porte-vélo comprenant
un premier module coulissant (510) disposé entre la troisième galerie de toit (130) et la deuxième galerie de toit (120) pour coupler la troisième galerie de toit (130) et la deuxième galerie de toit (120) et mobile le long de la troisième galerie de toit (130),
un deuxième module coulissant (520) disposé entre la quatrième galerie de toit (140) et la deuxième galerie de toit (120) pour coupler la quatrième galerie de toit (140) et la deuxième galerie de toit (120) et mobile le long de la quatrième galerie de toit (140),
en ce que la deuxième galerie de toit (120) est mobile le long de la troisième galerie de toit (130) et de la quatrième galerie de toit (140) au moyen du premier module coulissant (510) et du deuxième module coulissant (520),
en ce que dans un état dans lequel le premier module coulissant (510) est installé sur la troisième galerie de toit (130), la deuxième galerie de toit (120) est couplée au premier module coulissant (510),
en ce dans un état dans lequel le deuxième module coulissant (520) est installé sur la quatrième galerie de toit (140), la deuxième galerie de toit (120) est couplée au deuxième module coulissant (520),
**caractérisé par** un espace de montage formé entre des rouleaux (521, 522) du premier module coulissant (510), la deuxième galerie de toit (120) étant couplée au premier module coulissant (120) par l'intermédiaire de l'espace de montage et par un espace de montage (AS) formé entre des rouleaux (521, 522) du deuxième module coulissant (520), la deuxième galerie de toit (120) étant couplée au deuxième module coulissant (520) par l'intermédiaire de l'espace de montage (AS).

2. Porte-vélo selon la revendication 1, en ce que le bras de maintien (220) comprend :
une tige principale (221) reliée au boîtier (210) et entraînée en rotation dans le sens horaire ou le sens antihoraire autour du deuxième sens ;
une première tige de maintien (223) reliée à la tige principale (221) ;
un levier de réglage de tige (222) qui est disposé entre la tige principale (221) et la première tige de maintien (223) pour relier la tige principale (221) et la première tige de maintien (223) et pour déplacer la première tige de maintien (223) de telle sorte que la première tige de maintien (223) s'éloigne ou se rapproche de la tige principale (221) ; et
une deuxième tige de maintien (224) reliée à la première tige de maintien (223),
le module de fixation de cadre (200) comprend en outre un levier de réglage de maintien (230) disposé dans le boîtier (210) pour faire face au bras de maintien (220) et pour déplacer la deuxième tige de maintien (224) de telle sorte que la deuxième tige de maintien (224) s'éloigne ou se rapproche de la première tige de maintien (223), et
le cadre du vélo est disposé dans un espace vide entre la première tige de maintien (223) et la deuxième tige de maintien (224), et est fixé au module de fixation de cadre (200) par la première tige de maintien (223) et la deuxième tige de maintien (224).

3. Porte-vélo selon la revendication 1, comprenant en outre un dispositif de verrouillage (240) destiné à verrouiller le levier de réglage de tige (222) et le levier de réglage de maintien (230) afin d'empêcher l'actionnement du levier de réglage de tige (222) et du levier de réglage de maintien (230).

4. Porte-vélo selon la revendication 1, en ce que le bras de maintien (220) comprend :
une tige principale (221) reliée au boîtier (210) et entraînée en rotation dans le sens horaire ou le sens antihoraire autour du deuxième sens ;
une première tige de maintien (223) reliée à la tige principale (221) ;
une deuxième tige de maintien (224) reliée à la première tige de maintien (223) ; et
un levier de réglage de tige (222) disposé entre la tige principale (221) et la première tige de maintien (223) pour relier la tige principale (221) et la première tige de maintien (223),
la deuxième tige de maintien (224) s'éloigne ou se rapproche de la première tige de maintien (223) lorsque le levier de réglage de tige (222) se déplace dans un sens d'extension de la tige principale (221),
une position de la deuxième tige de maintien (224) est fixée lorsque le levier de réglage de tige (222) est entraîné en rotation autour du sens d'extension de la tige principale (221), et
le cadre du vélo est disposé dans un espace vide entre la première tige de maintien (223) et la deuxième tige de maintien (224).

5. Porte-vélo selon la revendication 4, comprenant en outre un dispositif de verrouillage (240) destiné à verrouiller le levier de réglage de tige (222) afin d'empêcher l'actionnement du levier de réglage de tige (222).
